# EUROPEAN PATENT APPLICATION

(11) **EP 1 983 428 A2**
(43) Date of publication of application: **22.10.2008**
(21) Application number: 08159588.6
(22) Date of filing: 04.02.2005
(51) Int. Cl.: G06F 9/44, G06F 9/46

(54) **Generic design approach for multi-layer architecture**

(30) Priority: 16.03.2004 US 553632; 15.03.2004 US 553086; 16.03.2004 US 553639; 16.03.2004 US 553682; 18.01.2005 US 37411
(62) Divisional of application: 05002377.9
(71) Applicant: Ramco Systems Limited, Chennai, Tamilnadu 600 113 (IN)
(72) Inventor: Sundarararajan, Pathasarathy, 600 083, Ashok Nagar Chennai (IN); Jayaraman, Shyamala, 600 014, Chennai (IN); Sathiavageeswaran, Suresh, 600 085, Kottur Chennai (IN); Krishnan, Natarajan, 600 042, Chennai (IN); Krishnakishore, Bhavaraju V., 600 020, Adyar Chennai (IN); Raja, Pusupadi Ramasubramania R.V., 626 117, Rajapalayam Tamil Nadu (IN)
(74) Representative: Betten & Resch

(57) **Abstract**

A method affords the design of a generic structure for a deployment topology and deployable artifact (executable code) packages. After completion of the design, the artifact packages are mapped over the generic topology structure, component information is uploaded into a directory (270), and the directory used to route service requests. In another embodiment, a method affords the design of a generic structure (200)for system services and user interfaces. After the design, semantics are abstracted and used to data bind the system services and the user interfaces. In another embodiment, a computer information system is described having a gateway layer (260) that permits platform independent deployment and ease of request routing.

## Description

### Related Application

This is a divisional application from European patent application number 05 002 377.9-2211 in the name of Ramco Systems Limited.

### Field of the Invention

The present invention relates to computer information systems, and in particular, a generic design approach for computer information systems that have multiple components, multiple levels, multiple systems and/or multiple machines.

### Background of the Invention

White software applications in a computer information system are normally broken into subsystems or components for modularity and ease of development, the resulting system is ironically complex because the multiple components, multiple layers, and multiple systems and sub-systems that are deployed across multiple machines or nodes, all may require either direct or indirect access to each other. At a minimum, the components in one layer use the services of the components in the next layer, thereby requiring some communication between the two components. More broadly, the components of the applications interact amongst themselves by accessing the services offered by each other. During deployment, as the application and its components are separated into the appropriate logical and physical layers, each component in a layer must know the exact location of its counterpart in the next layer and also the locations of the other components in order to access their services.

It is therefore necessary that proper topology selection (both hardware and software) is made to fix the locations (machines, application servers, etc.) in terms of IP addresses (assuming the TCP/IP protocol is used for accessing the services of the system) and ports. Often in real life situations, when fine-tuning live applications for availability and scalability factors, the locations may change dynamically due to an increase in the number of machines, an increase in the number of software servers, and/or the relocation of components. If this topology and location information is hard-coded in the software applications, this information is bundled along with application and service requests among the components and routed appropriately. However, in multi-component architectures it becomes difficult to handle such hard-coded location and routing requirements. Another important factor for the software applications relates to providing interfaces for external applications to access the application services. If this information is hard-coded in the (internal) applications also, the external applications will not have any information of internal components and their locations except that which is specifically provided for by the interfaces offered to the external applications.

In this context of component, layer, and system communications, it is often desirable, from a load balancing point of view, to persist system data (*i.e.,* collect, store, and maintain for future use), even of a single component in a distributed fashion, throughout the entire information system. Again, because this distribution might cross machine, node, and system boundaries, it will in all likelihood introduce further routing complications which are very difficult to keep track of if hard-coding is used, Additionally, most existing routing architectures are closely tied to the underlying technology platform, and thereby oftentimes limit the true effectiveness of such routing schemes.

To check the effectiveness of a routing scheme, a system should be monitored and analyzed after installation. Many systems manage this by instrumenting the performance of the various components, layers, systems and subsystems, and different machines and nodes of the software applications running on the system. Such instrumentation can identify areas for system improvement by identifying the bottlenecks in various performance scenarios in the framework of the system.

However, one of the very reasons for instrumenting information systems, *i,e.* the need to determine how the system operates over its many components, layers, systems and subsystems, and machines and nodes, itself causes difficulties in the actual instrumenting of the information system, That is, while the instrumentation data that needs to be collected is in all likelihood spread across the different machines of the information system, eventually the instrumentation data needs to be brought into a single physical location for analysis. This is particularly true in internet-enabled complex business systems where the application spans multiple machines. For ease of analysis of the system performance, it is imperative that all the instrumentation data gathered across the subsystems be delivered for analysis in one place.

Additionally, while it is important to the prolonged health of an information system to instrument data on a regular basis, instrumentation does utilize resources of the system, resources that could be used for other purposes. This presents a Catch-22 to a system operator vis-à-vis system maintenance, *i.e.* an operator must maintain the efficiency and health of a system by instrumenting the system, but by instrumenting the system, the operator taxes the resources of the system, thereby adversely affecting the efficiency and health of the system.

Moreover, the multi-component complexity of these information systems, and the need to instrument such systems, begets underlying complex data structures. Hence the user-interfaces required to operate these instrumenting processes are also complex, As such, they normally need, and indeed have, a rich repertoire of controls.
The implication is that the binding between the user-interface elements and the underlying system services are governed by complex semantics. For a user's view of the data is typically descriptive, while considerations such as optimal storage constraints limit the system representation of the same data to cryptic codes. Multi-language support considerations further complicate the matter. And while a system view of the data is language neutral, the user sees the same in his language of choice. To make things worse, in conventional development, most of these considerations get addressed fairly late in the software development life cycle, The net impact of all these issues is that the code that implements the data binding between the user interface and the underlying business system services tends to get complex, unwieldy and error prone.

Because of the resulting complex data structures, many information systems utilize service oriented architecture. In service oriented architecture, system components are loosely coupled and they interact through documents. The trade off in this case is performance, because the metadata information that is passed through the document has to be opened and read by various infrastructure components. By comparison, in a tightly coupled traditional system, this metadata information is built into a component application (rather than a document), which will result in good performance, but it will be very difficult to modify the system for the process changes.

### Summary of the Invention

The invention in a broad form provides the design of a generic structure for deployable topology and deployable artifact (executable code) packages. After completion of the design, the artifact packages are mapped over the topology structure, component information is uploaded into a directory, and the directory used to route service requests. As described hereinafter, the design affords the structure for system services and user interfaces. After the design, semantics are abstracted and used to data-bind the system services and the user interfaces. The invention also provides a computer information system having a gateway layer that permits platform independent deployment and ease of request routing. A computer readable medium incorporating a method and the design is also disclosed.

In one form, the invention resides in a method comprising: designing a generic structure for system services; designing a generic structure for user interfaces; abstracting semantics for data-binding between said system services and said user interfaces; and implementing said semantics as data binding rules. In a second form, the invention resides in a model driven computer software information system including deployable packages with executable code for providing deployable topology and, comprising: one or more machines, the machines comprising one or more sub-systems, the sub-systems comprising said one or more machine layers; one or more machine-components contained in said one or more machine layers; and a gateway layer connected to communicate with said one or more machines; wherein the gateway layer is configured to route service requests and comprises a gateway component through which said one or more machine-components, said one or more machine layers, said one or more sub-systems, and said one or more machines communicate.
The gateway layer may be centrally located or can alternatively be additionally located with one or more of the machines. The term "machine" herein is meant to be understood, as in the American Heritage Dictionary of the English Language (1981), to comprise any system or device such as an electronic computer that performs or assists in the performance of a human task. In a third form, the invention resides in a computer readable medium comprising instructions available thereon for executing a software system developed by a method comprising the steps of: designing a generic structure for system services; designing a generic structure for user interfaces; abstracting semantics for data-binding between said system services and said user interfaces; and implementing said semantics as data binding rules.

### Brief Description of the Drawings

Figure 1 is an example of a multi-component information system resulting from an implementation of the present invention.

Figure 2 is another example of a multi-component information system resulting from an implementation of the present invention, wherein each machine has a dedicated gateway layer.

Figure 3 is another example of a muiti-component information system resulting from an implementation of the present invention, wherein the gateway layer has a central trace component.

Figure 4 is a schematic block diagram of an exemplary information processing system that can be used to run some or all portions of the invention.

### Description of Embodiments

In one embodiment of the present invention, a gateway layer is introduced into an information system to implement a platform independent routing architecture for systems with multiple components, layers, systems/subsystems, and machines/nodes.
The gateway layer provides the necessary interfaces for locating and routing the service requests from and to each and every component in the system, and it serves as a common entry point to both internal service requests (*i.e.* within a layer or subsystem) and external service requests (*i.e.* from other systems or machines).

The gateway layer uses a software model driven approach to derive the location information of each component and the same is populated into a directory. In this instance, a software model driven approach refers to modeling every significant part of the system as data and using that data in the gateway layer. Because a software model-driven approach for development and deployment is used, the details about all the components of software applications, the services offered by the components at each layer and the interactions between the components in terms of accessing the services at each layer are captured automatically in the model. It is these details that are populated into the directory. After building the directory, when the gateway layer receives a request, it retrieves the location information from the directory server and routes the service request appropriately for accessing the service. A service is implemented by one or more modules of executable code, also referred to as artifact packages. Since the information is separated from the application and available in a directory server, dynamic changes of application location do not affect the system.

At run time, separate system components that form the gateway layer identify the location of the components at each layer and route the requests to the service layer appropriately. During actual development of the components from the information available in the model, components will go through the gateway layer for identifying the location and routing the service requests. In this way, the tasks of locating and routing the service requests are separated from the actual components themselves.

After the components development, using the software model-driven approach for deployment, a deployment scheme is derived from the deployment model for a selected topology of hardware and software. This scheme identifies all the machines participating in the deployment, the configuration of each machine (operating system, IP address, etc.), the application servers, the number of instances of each application server in each machine, and the layer separation of the application servers. Further, the mappings between the components and the application server instances are also identified. Using this scheme, actual deployment is automated. Because the deployment is implemented using a model driven approach, the deployment can be done in a platform independent manner, as the model driven scheme determines the schema of the topology of hardware and software.

Since the deployment is automated, the deployment scheme has the exact location information (IP address of the machine, the port on which the application server instance is running) and this information is uploaded into a directory server from the deployment model. As mentioned above, the gateway layer system components (which offer services in locating the component services and then routing) will have the built-in functionality to retrieve the information from the directory server.

When there is any change in topology, *e.g.* either changing the number of servers or machines, the deployment model is updated for the topology changes and the necessary component mappings are done. Using the updated deployment scheme from the model, components of the applications are re-deployed automatically and the location information is updated in the directory server.

The gateway layer can differentiate between the service requests from internal and external components and thereby provide different levels of security for internal requests (as users already would have been authenticated in a previous layer, there won't be any need of further authentication at gateway layer at each service level) and external requests (requiring a higher degree of authentication/authorization). Considering security issues at user and role levels, since the information is available in the directory server, it is easy to add new users and add new roles and map required services offered by the components to a user or a role. In this way, the gateway layer can restrict the access dynamically, at any level, without any code alteration.

The deployment scheme allows a component (or a set of components) to be available in multiple locations. When the gateway layer receives a service request, it retrieves all possible locations of the component from the directory server and chooses that instance of the application server for processing the request that is currently free as a means to load balance the service requests. It also ensures that if an application server is down and not able to fulfill the service request made, the request is forwarded to an alternative application server, if available.

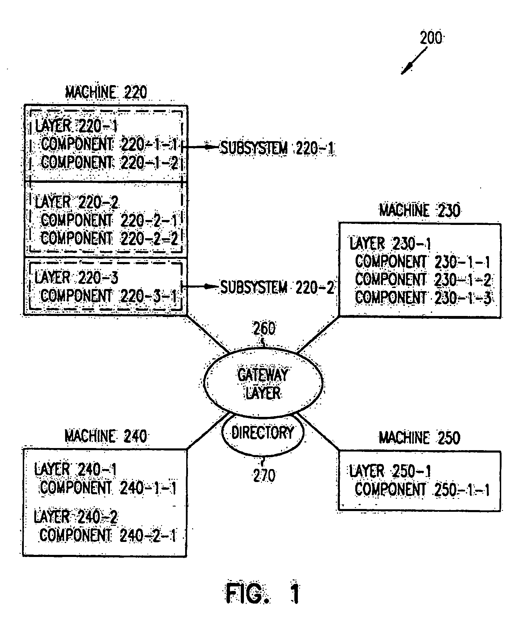

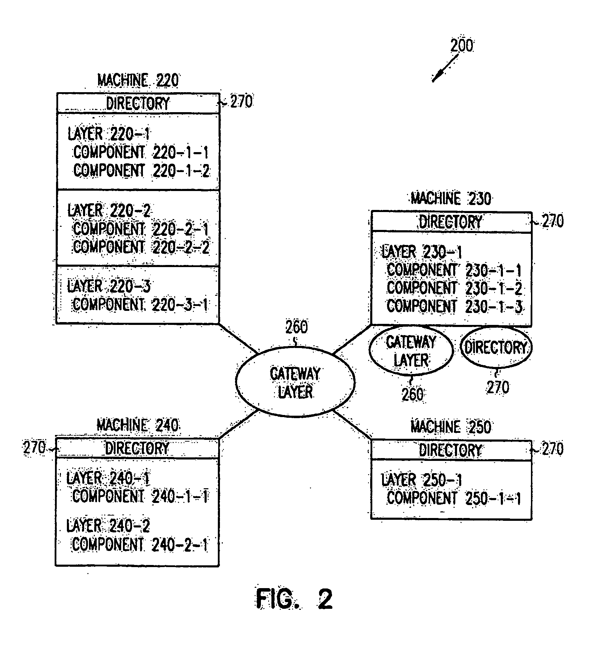

Figure 1 illustrates one example of a system topology that could result from the model driven development and deployment of an embodiment of the present invention. Specifically, Figure 1 illustrates an information system 200 that includes machines 220, 230, 240 and 250, and gateway layer 260. As can be seen from Figure 1, each machine has a system or subsystem (*e.g.* subsystem 220-1 and 220-2 of machine 220), within which are one or more layers (*e.g.* layers 220-1, and 220-2 of subsystem 220-1), and within which are one or more components (*e.g.* components 220-1-1 and 220-1-2 of layer 220-1). While the gateway layer 260 is shown as an external module to all of the machines, gateway layer 260 could be resident on one of the four machines, and still communicate with all the other machines. *See* Figure 2. In the gateway layer 260 is the directory 270, which is generated by the model, and which contains the details about all the components and the interactions between the components in terms of accessing the services at each layer.

In some embodiments, the above-described model driven approach, in addition to providing for the design of generic structures for a deployment topology and deployable artifact packages, allows for automated generation of system services application code. In such a system, the user-interfaces of a component are captured in the model during a requirement generation process. In cases in which the applications are multi-layered and web based, the user interfaces are html pages and the data-holders are html controls. The generated application implements a document-based architecture and uses clearly defined semantics to bind the user-interface elements to the systems' services structure. These semantics are then the data binding rules of the system (between interfaces and services). The interface data structure of a service is composed of the data items it receives to execute the requested service and the resultant data items it returns. This interface data structure then becomes the structure for the document passed to it on invocation. This structure has multiple segments and each segment has its own fields. These segments have further attributes to define the number of instances (as either single instance segment or multiple instance segments) that they can hold. In some embodiments, the segments of a document are defined to have linear information and no internal relationship exists between segments. After defining the structure for each document, the details about the segments and their fields are captured in the model. Relationships (mappings) between the services of a component and the documents are also persisted in the model.

From the user-interfaces and their action details (mapped services), the necessary documents that are to be supported by the user interface can be generated. Then the actual issue of data binding between the controls (data-holders) and the appropriate segments is addressed. This involves complex semantics for exchange. Examples of these complex semantics (for data using controls) include that a single valued piece of data that isn't manipulated internally can only be represented by an edit control, a single valued data that is chosen from either pre-defined values or arrived at from a selection criteria can only be represented by a combo control, multi-valued data that are either pre-defined values or arrived at from selection criteria can only be represented by a list control, data from given option or option/radio buttons and check boxes can only be represented by yes/no states respectively, and multiple-lines or tables can only represented by multi-valued data that form multiple rows with primary and/or secondary keys.

Examples of complex semantics (involving mapping between the controls and the segments of a document) include the fact that edit controls can only be mapped to a single instance segment and to a field in the segment, However, multiple edit controls can have mapping to a single segment. That is, a single instance segment can cater to a pool of edit controls. Also, if a combo control/ list control requires both the optional values and the selection, it should be mapped only to a multiple instance segment having the necessary field for data and a field for selection information. In case of a combo control, the selection information can be obtained/sent through a single instance segment and through one of its fields. If represented data are differently manipulated internally in a hidden way, the multiple instance segments would have appropriate fields for those internal manipulations. As another example, option buttons and check boxes are equivalent to combo controls but the data is internally manipulated and the presentation data is not transported. They can only be mapped to multiple instance segments in case of internally manipulated data and a single instance segment for the selection information. A final example is that if data are to be represented in a table/multi-line control, the multi-line control is to be mapped to a multiple instance segment.

These semantics are built as validations into the model so as to ensure that all mappings made are semantically correct. One additional benefit of this approach is that the model also helps in reviewing the user-interface design and also provides the rework inputs when no existing service directly meets a user interface requirement.

Since all the above information is available as a model, it helps in defining the memory structure to be used to hold the data in a web server so as to make session management easy. Since code generation out of this model is automated, human errors that very often creep into data-binding code can be avoided.

In one embodiment, the means of interaction between the user interface/service requestor and the underlying system services in an implementation of the present invention using a document-based architecture, is a transaction document. In such an embodiment, the transaction document allows the many components of the system to communicate with one another. And in addition to transporting data between user requests and system services, instrumentation data is input into the transaction document. By using a transaction document for instrumentation data, invasion into application code is minimized. This allows for changes to be made to the instrumentation details with minimal impact on applications. As the transaction document travels through the various layers of the application, these layers log instrumentation information about key operations that they perform into the instrumentation area of the transaction document. Instrumentation data is thus incrementally built up as the document is processed.

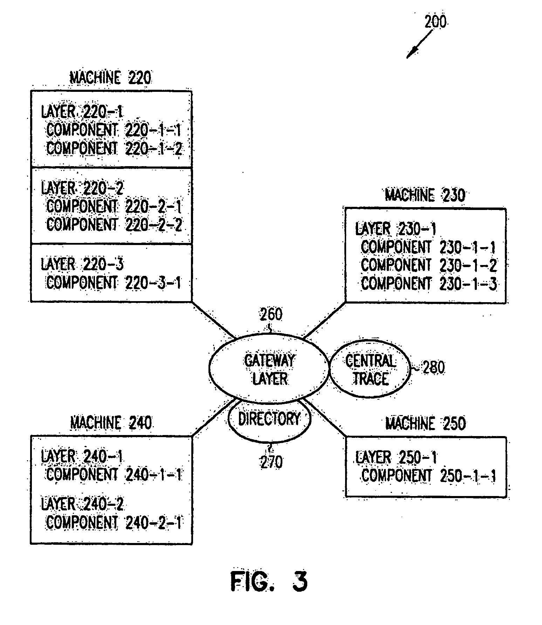

In another embodiment, the processing logic for instrumentation is abstracted into a central trace component (program) that is responsible for offering all services for reporting, persisting and displaying instrumentation information. Figure 3 illustrates a central trace component 280 that is resident in a gateway layer. However, since instrumentation data is gathered in the transaction document, no separate logic is needed to actually transport this document through the physically separate layers of the application, or to aggregate the consolidated data in a single place. The underlying transportation infrastructure for document routing is itself leveraged to consolidate the instrumentation information into a central repository. Moreover, by using an existing transaction document in a system, the instrumentation process becomes platform independent.

In one or more embodiments of the present invention, a Trace Flag is introduced to switch instrumentation on and off and to set varying degrees of instrumentation and focus on different parts of the application. The facility to focus on certain areas of the application at a greater detail compared to other parts of the system allows a system operator to drill-down to a problem area in the application. Also, since the Trace Flag works at the User-Transaction level, the impact on system performance in terms of overheads is kept to a bare minimum. The Trace Flag is passed through to all the participating components in the run-time sequence. The Instrumentation content that each component logs will depend on the value of the Trace Flag. Two parameters influence this value---Trace Level and Trace Layers. The Trace Level flag indicates the extent to which instrumentation data is mined. For example, in one embodiment, the Trace level takes on four possible Trace Levels-Level 0 indicates that no instrumentation data is mined. Level 1 indicates that a minimal level of instrumentation data is mined. Level 2 indicates that the instrumentation data that is mined is detailed, and Level 3 indicates that the instrumentation data to be mined is exhaustive. Each component in the system has logic so that it knows what data to log depending upon the value of the Trace level. The Trace Layer parameter signifies the sub-set of layers in which Trace content needs to be generated. For example, trace logging may be done in a single layer (*e.g.* the Web layer), two layers (*e.g.* the Web and Gateway layers), three layers (*e.g.* the Web, Gateway and Application layers), or any combination of these or other layers.

In one embodiment, the Trace flag is implemented as a sixteen bit binary number. In such an embodiment, fifteen of the sixteen bits are used to represent the Trace Flag. The 15 bits are subdivided into 5 sets of 3 bits each with each set representing the Trace Level for a certain layer. This representation allows for a maximum of 8 levels of trace in a layer and up to 5 different logical layers.

In another embodiment, the Trace flag may be set for both deployment-time and run-time sequences. The Trace Flag value will be set as part of User Preferences during Deployment, and can be modified at Run-time. It is fetched at application start-up and passed on through all the layers as part of the transaction Document's context. At each layer all components in that layer log appropriate trace information as applicable for the specified Trace Level. If the Trace Flag value is Non-zero, a toggle button is enabled in a tool bar in the application that allows the User to toggle Trace. This Trace toggle button will not appear in the toolbar if the User's preferred Trace Flag value is 0 *(i.e.* it was not set at deployment). The default value for the toggle button will be Trace Off, thus requiring the user to explicitly enable Trace, if the user wants instrumentation data captured for his task execution. The Trace Flag propagates through the application as part of the Transaction document. Each subsequent component in the run-time sequence receives the Trace flag value and appropriately logs Instrumentation content as per the Trace level indicated in the flag *(i.e.* None, Minimal, Detailed, or Exhaustive). The Trace content may be held in an XML string that may be created at the start of processing and passed on to every subsequent component in the run time sequence. Each component incrementally appends its instrumentation log to this XML string. At the end of the transaction, the transaction document is saved as an XML document as the final step in its processing sequence. In another embodiment, the document is saved as an Excel file.

To store the instrumentation data in a transaction document, an embodiment of the present invention forms a key to identify the instrumentation record. The User Name, Task Name, Date and Time, form the key for the instrumentation content which is held in the Context segment of the XML string. The key elements can be used to formulate the unique name for the XML file. Each key operation and each participating component logs the duration it takes to perform the operation and the actual time (as GMT plus/minus time) at which it received/dispatched the message if it is a terminal element in a layer.

A generic component named TraceDocAgent may be used by the run time components to incrementally build the Trace. The TraceDocAgent offers services to load the string, add instrumentation information incrementally and also finally maintain the trace information.

By adopting a model-based approach to the development of the appliction, with code automatically generated out of the application, Trace implementation can be kept out of the application developer's scope. The code generator takes care of transparently generating the plumbing code required to enable instrumentation.

In the following specific example of a transaction document that can be used in connection with the present invention, the document is compact and contains only the key information that is required for locating and executing a service. The document structure has the following, three key segments---Context Segment, Data Segment, and Error Segment.

The Context Segment contains the following fields:
• Project ID
• Component Name
• Component Instance
• Organizational Unit Instance
• Service Name
• Follow-up Service Name
• Trace Flag
• User Name
• User Location (Locale ID or Language)
• Transaction Outcome
• Transaction Time

The Project ID is the name of the Application. The Component Name is the name of the component (*i.e.,* that represents a Business function in the system). The Component Instance identifies one of the running instances of a Component. The Organizational Unit Instance (OU Instance) identifies the Organizational Unit. The Application Component Router uses the Component Name, Component Instance and OU Instance to locate the Application Server Instance where the Component is deployed, This deployment information is listed in the Directory Server. The Service Name uniquely identifies the requested Service. The Follow-up Service Name holds other Service names that the Application might want to execute before returning to the User Interface Layer. The User Name and User Location fields identify the User and his locale preference. The Transaction Outcome field reports the status of the Document execution. The Transaction Time indicates the Document execution time.

The data structure of the Data Segment varies and depends on the component and the service that that component provides in the system. Moreover, there can be more than one Data Segment, and the number of Data Segments depends on the number of Segments defined in the Service.

In this example, the *Error Segment* contains the following fields:
• Data Segment Name (focusdatasegment)
• Data Instance Name (focusdatainstance)
• Data Item Name (focusdataitem)
• Sequence Number (seqno)
• Error Number (errorno)
• Error Description (errordesc)
• Error Source (errorsource)
• Error Severity (severity)
The Data Segment Name, in the above list, is the name of the Data Segment in which the error is raised. The Data Instance Name is the row number of the record that caused the error---this is applicable only to multi-segment data. Data Item name is the name of the Data Item that caused the error. These data related values give great control to the calling Application to handle the error situation more meaningfully. For example, if the calling Application uses a Grid control, after the reading the Error segment details, the Application can set the Focus to the appropriate row and cell of the Grid Control. This will give a chance to the user to correct immediately as soon as he saw the error raised by the Application Server. This is one of the powerful features of this invention. The Sequence Number describes the order in which the error messages are to be displayed to the User. This is another simple but very important feature. The Error Number, Error Description, Error Source and Error Severity, describe the error and its source. The following sample illustrates the Error Segment portion of the invention.

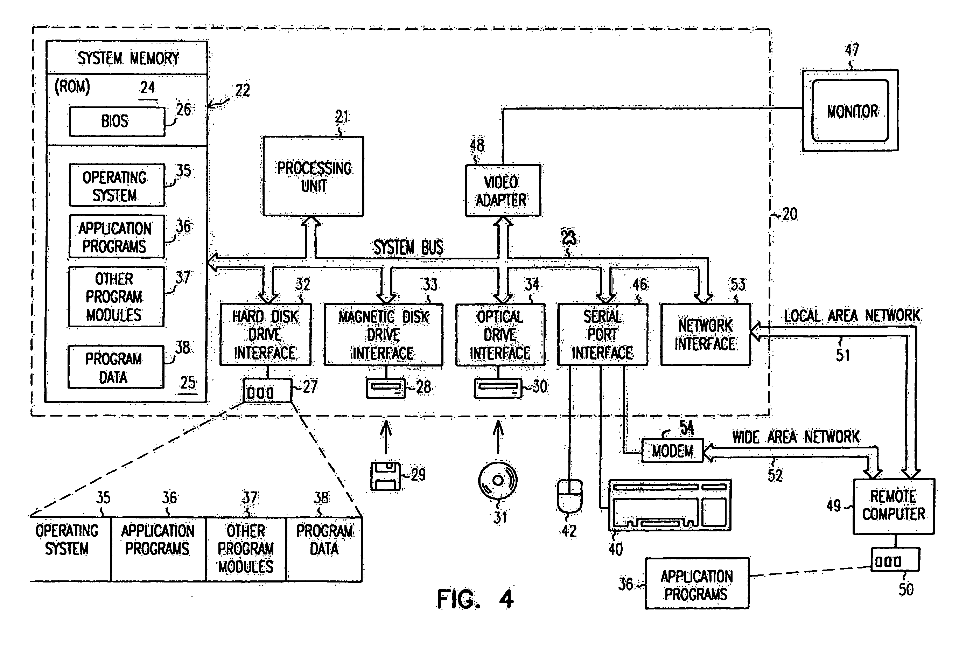

FIG. 4 is an overview diagram of hardware and an operating environment in conjunction with which embodiments of the invention may be practiced. The description of FIG. 4 is intended to provide a brief, general description of suitable computer hardware and a suitable computing environment in conjunction with which the invention may be implemented. In some embodiments, the invention is described in the general context of computer-executable instructions, such as program modules, being executed by a computer, such as a personal computer. Generally, program modules include routines, programs, objects, components, data structures, etc., that perform particular tasks or implement particular abstract data types.

Moreover, those skilled in the art will appreciate that the invention may be practiced with other computer system configurations, including hand-held devices, multiprocessor systems, microprocessor-based or programmable consumer electronics, network PCS, minicomputers, mainframe computers, and the like. The invention may also be practiced in distributed computer environments where tasks are performed by I/0 remote processing devices that are linked through a communications network. In a distributed computing environment, program modules may be located in both local and remote memory storage devices.

In the embodiment shown in FIG. 4, a hardware and operating environment is provided that is applicable to any of the servers and/or remote clients shown in the other Figures.

As shown in FIG. 4, one embodiment of the hardware and operating environment includes a general purpose computing device in the form of a computer 20 (e.g., a personal computer, workstation, or server), including one or more processing units 21, a system memory 22, and a system bus 23 that operatively couples various system components including the system memory 22 to the processing unit 21. There may be only one or there may be more than one processing unit 21, such that the processor of computer 20 comprises a single central-processing unit (CPU), or a plurality of processing units, commonly referred to as a multiprocessor or parallel-processor environment. In various embodiments, computer 20 is a conventional computer, a distributed computer, or any other type of computer.

The system bus 23 can be any of several types of bus structures including a memory bus or memory controller, a peripheral bus, and a local bus using any of a variety of bus architectures. The system memory can also be referred to as simply the memory, and, in some embodiments, includes read-only memory (ROM) 24 and random-access memory (RAM) 25. A basic input/output system (BIOS) program 26, containing the basic routines that help to transfer information between elements within the computer 20, such as during start-up, may be stored in ROM 24. The computer 20 further includes a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM or other optical media.

The hard disk drive 27, magnetic disk drive 28, and optical disk drive 30 couple with a hard disk drive interface 32, a magnetic disk drive interface 33, and an optical disk drive interface 34, respectively. The drives and their associated computer-readable media provide non volatile storage of computer-readable instructions, data structures, program modules and other data for the computer 20. It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), redundant arrays of independent disks (e.g., RAID storage devices) and the like, can be used in the exemplary operating environment.

A plurality of program modules can be stored on the hard disk, magnetic disk 29, optical disk 31, ROM 24, or RAM 25, including an operating system 35, one or more application programs 36, other program modules 37, and program data 38. A plug in containing a security transmission engine for the present invention can be resident on any one or number of these computer-readable media.

A user may enter commands and information into computer 20 through input devices such as a keyboard 40 and pointing device 42. Other input devices (not shown) can include a microphone, joystick, game pad, satellite dish, scanner, or the like. These other input devices are often connected to the processing unit 21 through a serial port interface 46 that is coupled to the system bus 23, but can be connected by other interfaces, such as a parallel port, game port, or a universal serial bus (USB). A monitor 47 or other type of display device can also be connected to the system bus 23 via an interface, such as a video adapter 48. The monitor 40 can display a graphical user interface for the user. In addition to the monitor 40, computers typically include other peripheral output devices (not shown), such as speakers and printers.

The computer 20 may operate in a networked environment using logical connections to one or more remote computers or servers, such as remote computer 49. These logical connections are achieved by a communication device coupled to or a part of the computer 20; the invention is not limited to a particular type of communications device. The remote computer 49 can be another computer, a server, a router, a network PC, a client, a peer device or other common network node, and typically includes many or all of the elements described above I/0 relative to the computer 20, although only a memory storage device 50 has been illustrated. The logical connections depicted in FIG. 4 include a local area network (LAN) 51 and/or a wide area network (WAN) 52. Such networking environments are commonplace in office networks, enterprise-wide computer networks, intranets and the internet, which are all types of networks.

When used in a LAN-networking environment, the computer 20 is connected to the LAN 51 through a network interface or adapter 53, which is one type of communications device. In some embodiments, when used in a WAN-networking environment, the computer 20 typically includes a modem 54 (another type of communications device) or any other type of communications device, e.g., a wireless transceiver, for establishing communications over the wide-area network 52, such as the internet. The modem 54, which may be internal or external, is connected to the system bus 23 via the serial port interface 46. In a networked environment, program modules depicted relative to the computer 20 can be stored in the remote memory storage device 50 of remote computer, or server 49. It is appreciated that the network connections shown are exemplary and other means of, and communications devices for, establishing a communications link between the computers may be used including hybrid fiber-coax connections, T1-T3 lines, DSL's, OC-3 and/or OC-12, TCP/IP, microwave, wireless application protocol, and any other electronic media through any suitable switches, routers, outlets and power lines, as the same are known and understood by one of ordinary skill in the art.

In the foregoing detailed description of embodiments of the invention, various features are grouped together in a single embodiment for the purpose of streamlining the disclosure. This method of disclosure is not to be interpreted as reflecting an intention that the claimed embodiments of the invention require more features than are expressly recited in each claim. Rather, as the following claims reflect, inventive subject matter lies in less than all features of a single disclosed embodiment. Thus, the following claims are hereby incorporated into the detailed description of embodiments of the invention, with each claim standing on its own as a separate embodiment. It is understood that the above description is intended to be illustrative, and not restrictive. It is intended to cover all alternatives, modifications, and equivalents as may be included within the spirit and scope of the invention as defined in the appended claims. Many other embodiments will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein," respectively. Moreover, the terms "first," "second," and "third," etc., are used merely as labels, and are not intended to impose numerical requirements on their objects.

## Claims

1. A model driven computer software information system (200) including deployable packages with executable code for providing deployable topology and, comprising:
one or more machines (220, 230, 240, 250), said machines comprising one or more sub-systems (220-1, 220-2), said sub-systems comprising said one or more machine layers (220-1, 220-2, 220-3, 220-4);
one or more machine-components (220-1-1, 230-1-1, 240-1-1, 250-1-1) contained in said one or more machine layers (220-1, 220-2, 220-3, 220-4); and
a gateway layer (260) connected to communicate with said one or more said machines;
wherein said gateway layer (260) is configured to route service requests and comprises a gateway component through which said one or more machine-components (224-1-1, 230-1-1, 240-1-1, 250-1-1), said one or more machine layers (220-1, 220-2, 220-3, 220-4), said one or more sub-systems (220-1, 220-2), and said one or more machines (220, 230, 240, 250) communicate, wherein said gateway layer (260) comprises a document based transaction system which comprises a transaction document containing a context segment, a data segment, and an error segment.

2. The computer software information system (200) according to claim 1,
wherein the system stores location information of each said machine-component in a directory (270) and wherein the gateway layer (260) derives said location information from the directory (270), wherein further said gateway layer (260) comprises a document based transaction system which comprises a transaction document containing a context segment, a data segment, and an error segment.

3. The computer software information system (200) according to claim 2, wherein said context segment comprises;
a project identification field;
a component name field;
a component instance field;
an organizational unit instance field;
a service name field;
a follow up service name field;
a trace flag field;
a user name field;
a user location field;
a transaction outcome field; and
a transaction time field.

4. The computer software information system (200) according to claim 2, wherein said error segment comprises:
a data segment name field;
a data instance name field;
a data item name field;
a sequence number field;
an error number field;
an error description field;
an error source field;
an error severity field.

5. The computer software information system (200) according to claim 1, wherein said gateway layer (260) is model driven, wherein said model driven gateway layer (260) loads information into a directory (270), wherein said information comprises development and deployment information, wherein said gateway layer (260)receives a request from a first component, and routes said request to a second component, wherein said deployment information is used to deploy said one or more components on a topology of hardware and software.

6. The computer software information system (200) according to claim 1,
wherein said system comprises a request that is internal to a first machine (220);
wherein said system comprises a request that is external to said first machine (220);
and wherein said gateway layer (260) differentiates between said internal request and said external request, further wherein said gateway layer determines among several versions of a first component which version will receive said request.

7. The computer software information system (200) according to claim 2,
wherein said gateway layer (260) comprises a central trace component (280), said trace component collecting, reporting, persisting, and displaying instrumentation information;
wherein said instrumentation information is stored in said transaction document, wherein said trace component (280) further comprises a trace flag; and
wherein a value of said trace flag determines the type and extent of data to be collected as instrumentation data.

8. The computer software information system (200) according to claim 2,
further comprising a grid control;
wherein said error segment comprises detailed information as to a cell of said grid control in which an error occurred.

9. The computer software information (200) according to claim 4, wherein said sequence number determines an order that said error descriptions are displayed to a user.

10. A model driven computer software information system (200) having multi-layer architecture for providing deployable topology and deployable packages with executable code, comprising:
one or more machines (220, 230, 240, 250), said machines comprising one or more sub-systems (220-1, 220-2), said sub-systems comprising said one or more machine layers (220-1, 220-2, 220-3, 220-4);
one or more machine-components (220-1-1, 230-1-1, 240-1-1, 250-1-1) contained in said one or more machine layers (220-1, 220-2. 220-3, 220-4); and
a gateway layer (260) selectively located with said at least one of said machines (220, 230, 240) and connected to communicate with said one or more said machines;
wherein said gateway layer (260) is configured to route service requests and comprises a gateway component through which said one or more machine-components (220-1-1, 230-1-1, 240-1-1, 250-1-1), said one or more machine layers (220-1, 220-2, 220-3, 220-4), said one or more sub-systems (220-1, 220-2), and said one or more machines (220, 230, 240, 250) communicate, wherein said gateway layer (260) comprises a document based transaction system which comprises a transaction document containing a context segment, a data segment, and an error segment.

11. The computerized model driven software information system (200) of claim 10,
wherein the system stores location information of each said machine-component in a directory (270) and wherein the gateway layer (260) derives said location information from the directory (270), wherein further said gateway layer (260) comprises a document based transaction system which comprises a transaction document containing a context segment, a data segment, and an error segment;
wherein said gateway layer (260) is model driven, wherein said model driven gateway layer (260) loads information into a directory (270), wherein said information comprises development and deployment information, wherein said gateway layer (260) receives a request from a first component, and routes said request to a second component, wherein said deployment information is used to deploy said one or more components on a topology of hardware and software; and,
wherein said gateway layer (260) further comprises a central trace component (280) for collecting, reporting, persisting, and displaying instrumentation information;
wherein said instrumentation information is stored in said transaction document, wherein said trace component (280) further comprises a trace flag; and
wherein a value of said trace flag determines the type and extent of data to be collected as instrumentation data.
